# EUROPEAN PATENT APPLICATION

(11) **EP 1 216 765 A1**
(43) Date of publication of application: **26.06.2002**
(21) Application number: 01204709.8
(22) Date of filing: 06.12.2001
(51) Int. Cl.: B09B 5/00, B23P 19/02

(54) **Method for invalidating coins, as well as a device for carrying out such a method**

(30) Priority: 19.12.2000 NL 1016911
(71) Applicant: Syntech Holdings B.V., 5916 PS Venlo (NL)
(72) Inventor: Kusters, Wilhelmus Martinus Anthonius, 5913 AT Venlo (NL)
(74) Representative: Dohmen, Johannes Maria Gerardus

(57) **Abstract**

Method and device for invalidating coins, which coins comprise at least a core and a ring surrounding said core. The core and the ring are made of different materials. The core is pressed out of the ring, after which the core and the ring are separately discharged.

## Description

The invention relates to a method for invalidating coins, which coins comprise at least a core and a ring surrounding said core, which core and which ring are made of different materials.

The invention furthermore relates to a device which is suitable for invalidating coins.

With a method which is known from International patent application WO 95/05100, coins comprising at least a core and a ring surrounding said core are invalidated by separating the individual parts Said separation requires a lengthy and costly mechanical treatment.

It is an object of the invention to provide a method by means of which a coin which is built up of a core and a ring can be invalidated in a relatively simple manner, in which the core and the ring are separated from each other.

This objective is accomplished with the method according to the invention in that the core is pressed out of the ring, after which the core and the ring are separately discharged.

It has become apparent that the core of such coins is clamped in position in the ring and that it can be pressed out of the ring by exerting a suitable force on the core. After the core and the ring have thus been separated, the core and the ring can be separately discharged and subsequently be melted down.

Another object of the invention is to provide a device by means of which the drawbacks of known device can be overcome.

This objective is accomplished with the device according to the invention in that the device includes means for pressing the core out of the ring as well as means for discharging the ring and the core separately from each other.

It is noted that with a method and a device that are known from the present applicant's International patent application WO 99/5263-8, the coins are mechanically deformed, with a profile being formed in the coins, such that the coins will no longer be accepted as means of payment. The coins thus invalidated can be melted down, for example.

If said method and said device are used for invalidating coins comprising a core and a ring surrounding said core, which core and which ring are made of different materials, an alloy which is determined by the composition of the materials of the core and the ring is obtained when the coins are melted down. The composition of said alloy may be such that the alloy will not be of much use.

More in particular, said objective is accomplished with the device according to the invention in that said means comprise two cylinders which rotate in opposite directions, wherein the first cylinder is provided with substantially radially extending passages in the cylinder wall, which extend into a core receiving space bounded by the cylinder wall, each passage being connected, on a side remote from the core receiving space, to an opening having a larger diameter than the passage, whilst the second cylinder is provided with substantially radial ejector pins, which can be coupled to successive openings in the first cylinder wall by rotating the cylinders in opposite directions.

Using two cylinders rotating in opposite directions, it is possible to separate large amounts of coins into cores and rings in a relatively simple manner.

To this end, the ring is introduced into the opening, after which the core is pressed into the passage by means of the ejector pin that has been brought into engagement with the opening. In order to realise this, the passage has a diameter which is larger than the diameter of the core that is to be removed, but which is smaller than the outside diameter of the ring. Subsequently, the core is introduced into the core receiving space bounded by the cylinder wall via said passage, from where it can be discharged. Rotation of the first cylinder will cause the ring that is present in an opening to fall out of said opening near the underside of the cylinder. Subsequently, the rings that are collected at that location can be discharged.

The invention will now be explained in more detail with reference to the drawings, in which:
Fig. 1 is a side elevation of a device according to the invention;
Fig. 2 is a front view of the device of Fig. 1;
Fig. 3 is a schematic representation of a coin invalidating device;
Fig. 4 shows a detail of a coin conveyor belt of the device of Fig. 3;
Figs. 5A and 5B are a top plan view and a cross-sectional view, respectively, of a coin metering device of the device of Fig. 3;
Figs. 6A and 6B show details of a cylinder wall of a first cylinder of the device of Fig. 3;
Figs. 7A and 7B are a front view and a detail view of a second cylinder of the device of Fig. 3; and
Fig. 8 shows a coin consisting of a core and a ring.

In the figures, like parts are numbered alike.

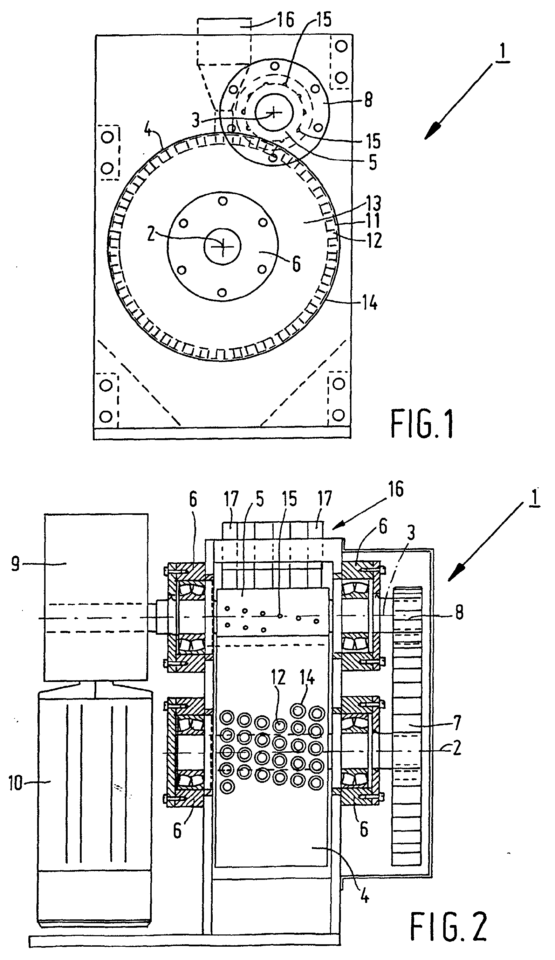

Figs. 1 and 2 are a side view and a front view, respectively, of a device 1 according to the invention, which comprises two cylinders 4, 5 which rotate about cylinder axes 2, 3. Cylinders 4, 5 are journalled in bearings 6 on either side. Each cylinder 4, 5 furthermore includes a gear 7, 8 which is rotatable about a respective cylinder axis, which gears are in engagement with each other. The cylinder 5 can be driven by means of a motor 10, via a transmission 9, on a side remote from gear 8.

The first cylinder 4 comprises a cylinder wall 11, in which a number of radially extending, regularly spaced-apart passages 12 are formed. Present within the cylinder 4 is a core receiving space 13, which is bounded by the cylinder wall 11. Each passage 12 is connected, on a side remote from space 13, to an opening 14 which is co-axial therewith, which opening has a larger diameter than the passage 12. The passages 12 and the openings 14 connected thereto are uniformly distributed over the circumference of the cylinder 4. The passages 12 and the openings 14 connecting thereto are furthermore arranged in a number of rows, six in the illustrated example, extending beside each other. As is shown clearly in Fig. 2, the passages 12 lying side by side are slightly staggered with respect to each other, seen in tangential direction, which provides a better distribution of forces than would be possible if the openings 12 were arranged in exact side-by-side relationship.

The second cylinder 5 has a smaller diameter than the first cylinder 4. The second cylinder 5 is circumferentially provided with radially extending ejector pins 15, which are spaced apart by a pitch distance that corresponds to the pitch distance between two successive openings 14 of the first cylinder 4. The cylinder 5 comprises a number of rows of ejector pins 15 being arranged in side-by-side relationship, seen in axial direction, said rows being staggered in tangential direction in a similar manner as the rows of passages 12 and the openings 14 connecting thereto.

The device 1 furthermore comprises a coin metering device 16, which comprises a number of coin feeding tubes 17 lying side by side.

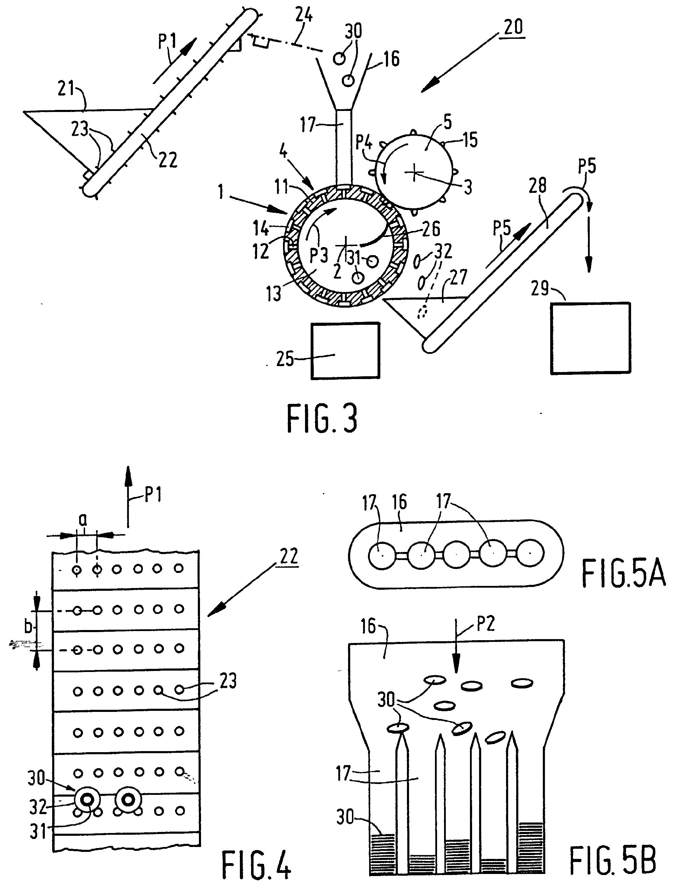

The device 1 that is shown in Figs. 1 and 2 is schematically illustrated in Fig. 3, in which it is shown to form part of a coin invalidating device 20. In addition to the device, the coin invalidating device 20 comprises a coin container 21, into which the coins to be invalidated are delivered. Disposed within the coin container 21 is an upwardly sloping, endless conveyor belt 22. The endless conveyor belt 22 includes stop pins 23, which are uniformly distributed over the surface of the conveyor belt 22. Preferably, the height of the pins 23, seen in a direction transversely to the conveyor belt 22, is slightly smaller than the thickness of the coins to be invalidated. The pins 23 are spaced apart in a direction transversely to the direction of transport P1 of the endless conveyor belt 22, by a distance a (see Fig. 4) which is smaller than the diameter of the coins to be invalidated. Two successive pins 23, seen in the direction of transport, are spaced apart by a distance b which is larger than the diameter of the coin to be invalidated. Disposed near the upper side of the endless conveyor belt 22 is a vibrating plate 24, which is positioned above the coin metering device 16 with a side facing away the conveyor belt 22. The side of the vibrating plate 24 near the coin metering device 16 is disposed at a lower level than the side of the vibrating plate near the endless conveyor belt 22. Preferably, the vibrating plate is furthermore wider near said lower portion than near said higher portion. The reason for this will be explained in more detail hereinafter.

The coin invalidating device 20 furthermore comprises a core receiving container 25, which is disposed beside the first cylinder 4, seen in axial direction. Disposed within the core receiving space 13 is a guide plate which is connected to the cylinder wall 11, by means of which cores present in the space 13 are guided towards the container 25.

The coin invalidating device 20 furthermore comprises a ring receiving container 27. An endless conveyor belt 28 is connected to said container 27, which conveyor belt extends above a discharge container 29 with an end remote from the container 27.

Figs. 5A and 5B are a top plan view and a front view, respectively, of the coin metering device 16.

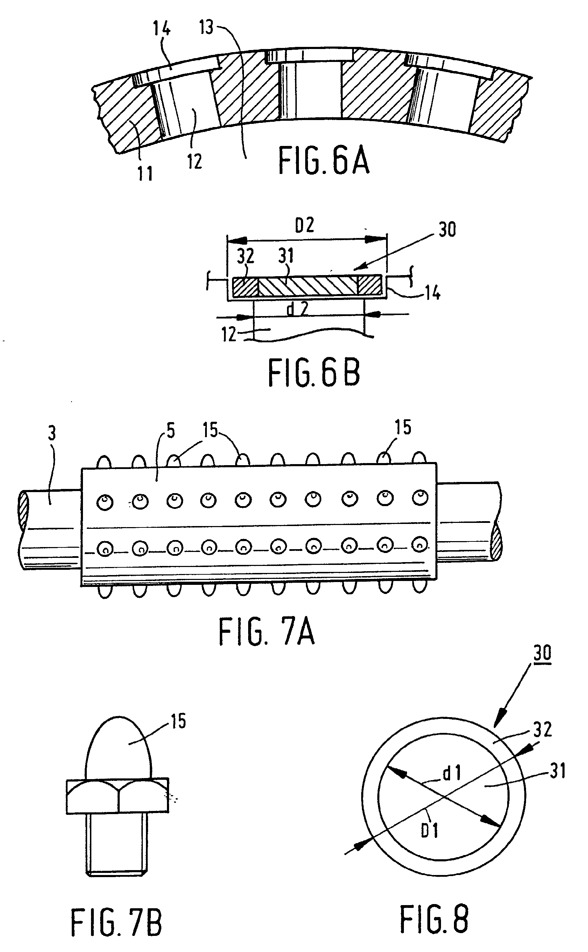

Figs. 6A and 6B show details of the cylinder wall 11.

Figs. 7A and 7B show details of the second cylinder 5 and of the ejector pins 5 that are mounted therein by means of screw thread.

Fig. 8 shows a coin 30 to be invalidated, which coin comprises a core 31 having a diameter d1 and a surrounding ring 32 having a diameter D1.

As is shown in Fig. 6B, the passage 12 has a diameter d2 which is larger than the diameter d1 but which is smaller than the diameter D1. The opening 14 that is co-axial with passage 12 has a diameter D2 which is larger than the diameter D1 of the coins 30 to be invalidated.

The operation of the coin invalidating device 20 will now be briefly explained.

Coins 30 to be invalidated are deposited in the container 21. Following that, the endless conveyor belt 22 is driven in the direction indicated by arrow P1 and the pins 23 are moved past the coins 30. This causes the coins 30 to abut against the stop pins 23 in the manner that is shown in Fig. 4, each coin 30 being supported by two pins 23. In this way, a first orientation of the coins 30 is effected. The coins 30 that have thus been oriented land on the vibrating plate 24 near the upper side of the endless conveyor belt 22. Since the vibrating plate 24 is narrower near the conveyor belt 22 than near the coin metering device 16, the coins 30 can be moved apart by causing the vibrating plate 24 to vibrate in the desired manner. The coins 30 subsequently fall into the coin metering device 16 in the direction indicated by arrow P2 (Fig. 5B) and land in the coin feeding tubes 17 which are arranged side by side. The coin feeding tubes 17 are positioned above the cylinder 4 with their ends remote from the vibrating plate 24. The cylinder 4 is rotated in the direction indicated by arrow P3 via the gears 7, 8, the transmission 9 and the motor 10. As soon as an opening 14 in the cylinder wall 11 is positioned under a coin feeding tube 17, a coin 30 will move into the opening 14 under the influence of the force of gravity. In this way, coins will be placed into all openings 14 in succession upon further rotation of the cylinder 4 in the direction indicated by arrow P3.

Positioned opposite the cylinder 4, as has been described above, is the cylinder 5, which is rotated in the direction indicated by arrow P4. The ejector pins 15 are inserted into the openings 14 of the cylinder 4 that is positioned opposite said cylinder 5. If a coin 30 to be invalidated is present in an opening 14, the ejector pin 15 will exert a force on the core 14, as a result of which the core 31 will be pressed out of the ring 32. The core 31 will move further into the passage 12 and land in the core receiving space. From there, the core is carried to the core discharge container 25 by means of the plate 26. After the core has been detached from the ring 32, the ring 32 will fall from the opening 14 into the container 27 under the influence of the force of gravity upon further rotation of the cylinder 4 in the direction indicated by arrow P3. The rings 32 are then carried in the direction indicated by arrow P5 to the container 29 by means of the endless conveyor belt 28.

After the cores 31 and the rings 32 have been separated from each other, the cores and the rings can be melted down separately, after which the materials thus obtained can be reused.

If it should be decided that the cores and the rings thus separated require further invalidation, said cores and said rings can be separately fed to an device such as disclosed in the aforesaid International patent application WO 99/52638 of the applicant.

## Claims

1. A method for invalidating coins, which coins comprise at least a core and a ring surrounding said core, which core and which ring are made of different materials, **characterized in that** the core is pressed out of the ring, after which the core and the ring are separately discharged.

2. A device suitable for invalidating coins, which coins comprise at least a core and a ring surrounding said core, which core and which ring are made of different materials, **characterized in that** said device includes means for pressing the core out of the ring as well as means for discharging the ring and the core separately from each other.

3. A device according to claim 2, **characterized in that** said means comprise two cylinders which rotate in opposite directions, wherein the first cylinder is provided with substantially radially extending passages in the cylinder wall, which extend into a core receiving space bounded by the cylinder wall, each passage being connected, on a side remote from the core receiving space, to an opening having a larger diameter than the passage, whilst the second cylinder is provided with substantially radial ejector pins, which can be coupled to successive openings in the first cylinder wall by rotating the cylinders in opposite directions.

4. A device according to claim 3, **characterized in that** the first cylinder wall is provided with a number of openings lying side by side, seen in axial direction, and with passages connecting thereto, whilst the second cylinder is provided with ejector pins, which can be coupled to said openings lying side by side.

5. A device according to claim 4, **characterized in that** the openings lying side by side are slightly staggered with respect to each other, seen in tangential direction.

6. A device according to any one of the preceding claims 3 - 5, **characterized in that** the diameter of the first cylinder is larger than that of the second cylinder.

7. A device according to any one of the preceding claims 3 - 6, **characterized in that** the coin receiving space in the cylinder is connected to a core discharging device.

8. A device according to any one of the preceding claims 3 - 7, **characterized in that** a ring receiving container is disposed under the first cylinder.

9. A device according to any one of the preceding claims 3 - 8, **characterized in that** the device furthermore includes a coin metering device, which comprises at least one coin feeder tube which extends in radial direction with respect to the first cylinder.

10. A device according to any one of the preceding claims 3 - 9, **characterized in that** the device furthermore comprises a coin feeder, which comprises an endless conveyor belt provided with pins, a first end of said endless conveyor belt being positioned in a coin container and a second end being positioned above a coin metering device.
